Europäisches Patentamt

European Patent Office

Office européen des brevets

(19)

(11) Veröffentlichungsnummer : **0 184 668**
**B1**

(12) # EUROPÄISCHE PATENTSCHRIFT

(45) Veröffentlichungstag der Patentschrift :
07.09.88

(21) Anmeldenummer : 85114123.4

(22) Anmeldetag : 06.11.85

(51) Int. Cl.⁴ : **G 02 B  6/42**, G 02 B  6/26

(54) Lösbare Verbindung zwischen einer Lichtleitfaser und einem Lasergerät.

(30) Priorität : 08.12.84 DE 3444823

(43) Veröffentlichungstag der Anmeldung :
18.06.86 Patentblatt 86/25

(45) Bekanntmachung des Hinweises auf die Patenterteilung : 07.09.88 Patentblatt 88/36

(84) Benannte Vertragsstaaten :
AT BE CH DE FR GB IT LI LU NL SE

(56) Entgegenhaltungen :
EP-A- 0 078 547
DE-B- 2 918 024
FR-A- 2 479 485
GB-A- 2 076 993
US-A- 4 307 934

(73) Patentinhaber : **Messerschmitt-Bölkow-Blohm Gesellschaft mit beschränkter Haftung
Robert-Koch-Strasse
D-8012 Ottobrunn (DE)**

(72) Erfinder : **Wondrazek, Fritz, Dr.
Riegelstrasse 27
D-8068 Pfaffenhofen (DE)**
Erfinder : **Hahn, Andreas, Dipl.-Ing.
Ringbergstrasse 19
D-8029 Sauerlach (DE)**
Erfinder : **Einars, Wolfram, Dr.
Wartbodenstrasse 95
CH-3600 Thun (CH)**

EP 0 184 668 B1

## Beschreibung

Die Erfindung betrifft eine lösbare Verbindung zwischen einer Lichtleitfaser und einem Lasergerät, insbesondere für medizinische Zwecke, mit einem ersten laserseitigen und einem zweiten lichtleitfaserseitigen Koppelelement, welches in eine Lichtaustrittsöffnung des ersten Koppelementes einsteckbar ist, wobei in der Lichtaustrittsöffnung des ersten Koppelementes eine mit diesem verbundene, parallel und/oder senkrecht zur Achse justierbare Einkoppeloptik angeordnet ist.

Eine Verbindung zwischen einer Lichtleitfaser und einem Lasergerät für einen Photokoagulator ist aus der DE-OS 3 121 287 bekannt. Diese Einrichtung besteht aus einem Lasergerät mit geeigneter Leistung und Wellenlänge, an welches eine Lichtleitfaser über eine spezielle Einkopplung mit optischen Elementen angeschlossen wird. Dabei bildet das lichtleitfaserseitige Koppelelement mit einer Einkoppeloptik und der Lichtleitfaser eine Einheit, welche in den parallelen Strahlengang eines Lasers mittels eines laserseitigen Koppelementes eingeschoben wird. Ein derartiger Lichtleiter ist relativ teuer und muß nach jeder Behandlung sterilisiert werden, wodurch die Gefahr einer Beschädigung der optischen Komponenten besteht. Da die Steckverbindungen für Lichtleitfasern im allgemeinen klein dimensioniert sind, erfordert deren Handhabung eine gewisse Fingerfertigkeit des Benutzers. Die mit hoher Präzision gefertigten Koppelelemente können leicht verkanten und durch Kraftanwendung beschädigt werden.

Eine andere Verbindung zwischen einem Lichtleiter und einer Laserdiode ist aus der US-PS 4 307 934 bekannt. Dabei wird der Lichtleiter mittels einer Überwurfmutter an einem die Laserdiode umschließenden Gehäuse mit einer Einstecköffnung befestigt. In der Einstecköffnung befindet sich eine Fokussierlinse. Diese Verbindung ist jedoch nicht für die Verwendung an medizinischen Lasergeräten geeignet.

Aufgabe der Erfindung ist es, eine lösbare Verbindung zwischen einer Lichtleitfaser und einem Lasergerät zu schaffen, welche einfacher und damit billiger herstellbar ist als die bisher bekannten Verbindungen und gegen Beschädigungen bei der Handhabung und während des Betriebes sicherer sind.

Diese Aufgabe erfüllt eine nach den kennzeichnenden Merkmalen des Patentanspruchs 1 ausgebildete Verbindung. Durch die Verlagerung der Einkoppeloptik in das laserseitige Koppelelement kann das im wesentlichen rein mechanische lichtleitfaserseitige Koppelelement entweder nach jedem Gebrauch leicht sterilisiert oder so billig hergestellt werden, daß die Lichtleitfaser mit dem zugehörigen Koppelelement als Einweginstrument wirtschaftlich verwendet werden kann. Durch die Einrichtung zur Erzeugung einer axialen Kraft auf das lichtleitfaserseitige Koppelelement ist die Verbindung selbststeckend und damit nicht mehr von der Fingerfertigkeit des Bedieners abhängig. Durch die gute Wärmeübertragung zwischen den Koppelementen wird eine Überhitzung durch unvermeidbare Einkoppelverluste vermieden.

Die Erfindung soll im folgenden anhand dreier, teilweise schematisch dargestellter Ausführungsbeispiele beschrieben werden. Es zeigen :

Fig. 1 eine selbstkoppelnde, elektrisch überwachte, lösbare Verbindung zwischen einer Lichtleitfaser und einem Lasergerät ;

Fig. 2 eine Verbindung gemäß Fig. 1 mit zusätzlicher optischer Selbstjustierung mittels eines Temperaturfühlers ;

Fig. 3 eine Verbindung gemäß Fig. 1 mit zusätzlicher optischer Selbstjustierung mittels Photoelementen.

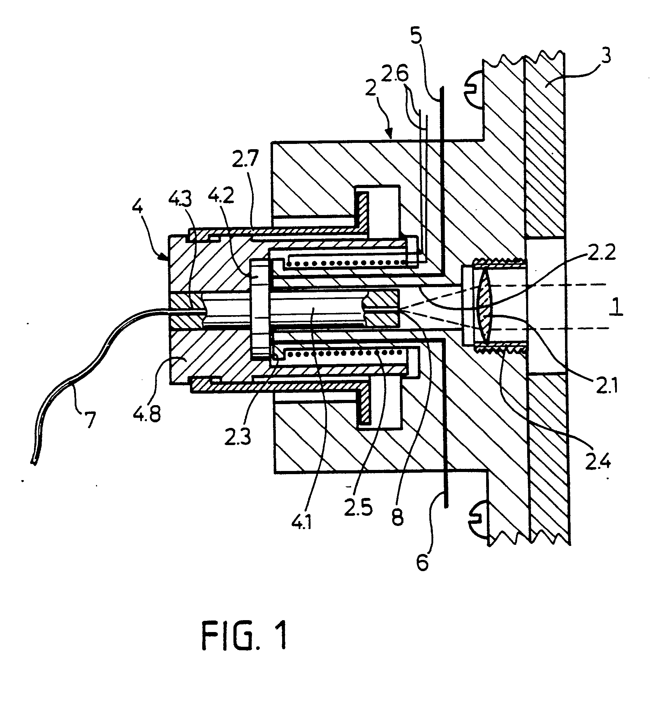

Bei dem in Fig. 1 dargestellten Ausführungsbeispiel wird die Strahlung 1 eines nicht näher dargestellten Lasergerätes auf eine Einkoppeloptik 2.1 gerichtet, welche in einer zylindrischen Öffnung 2.2 eines laserseitigen metallischen Koppelelementes 2 angeordnet ist. Das Koppelelement 2 ist mit dem Gehäuse 3 des Lasergerätes fest verbunden. In die zylindrische Öffnung 2.2 wird ein paßgenauer metallischer Führungsstift 4.1 eines lichtleitfaserseitigen Koppelelementes 4 geschoben. Die Einstecktiefe wird durch einen Kragen 4.2 des Führungsstiftes 4.1 bestimmt, welcher im eingekoppelten Zustand plan auf einer entsprechenden Ringfläche 2.3 des Koppelementes 2 aufliegt und einen guten Wärmeübergang gewährleistet. Gleichzeitig werden im eingekoppelten Zustand durch den Kragen 4.2 zwei elektrische Kontakte 5 und 6 kurzgeschlossen, wodurch eine elektrische Überwachung der Steckverbindung möglich ist. In einer zentralen axialen Bohrung 4.3 des Führungsstiftes 4.1 ist eine Lichtleitfaser 7 bis zum stirnseitigen Ende des Führungsstiftes hindurchgeführt. Bei zusammengesteckter Verbindung befindet sich die Frontfläche der Lichtleitfaser exakt im Brennpunkt 8 der Einkoppeloptik 2.1. Um dies zu gewährleisten, ist die Einkoppeloptik 2.1 in einer in das Koppelelement 2 einschraubbaren Fassung 2.4 axial verschiebbar.

Zur Erzeugung einer axialen Zugkraft auf das Koppelelement 4 ist die zylindrische Bohrung 2.2 von einer Spule 2.5 umgeben, die über eine Leitung 2.6 mit Strom versorgt wird. Zur Erzeugung einer magnetischen Kraft muß der Führungsstift 4.1 aus einem ferromagnetischen Material bestehen ; für das laserseitige Koppelelement ist dies nicht unbedingt erforderlich. Zur mechanischen Fixierung der Steckverbindung ist eine in dem Koppelelement 2 verankerte Überwurfmutter 2.7 vorgesehen, welche über ein Gewinde oder eine Bajonettverbindung eine mit dem Führungsstift 4.1 verbundene und als Schutzkappe für das Lichtleiterende dienende Hülse 4.8 mit dem Koppelelement 2 verriegelt.

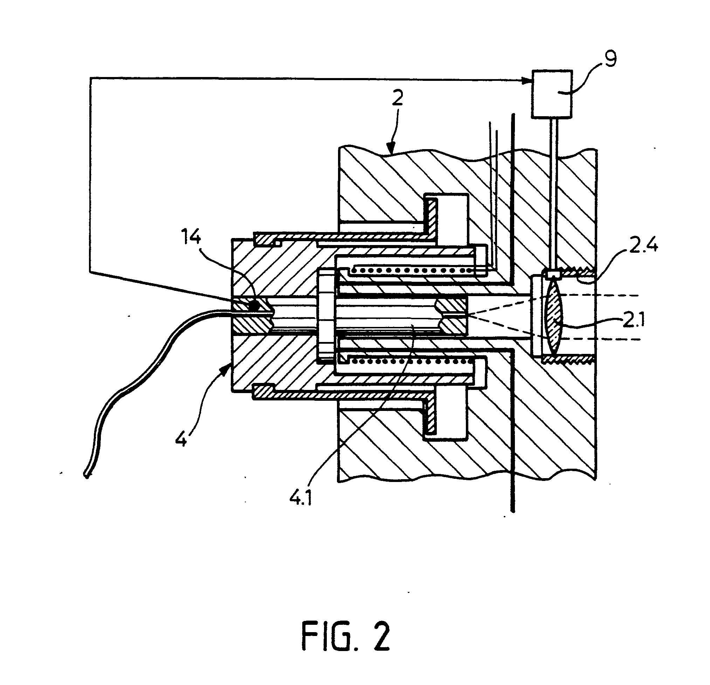

Das in Fig. 2 dargestellte Ausführungsbeispiel gleicht in seinen wesentlichen Bestandteilen demjenigen aus Fig. 1, jedoch ist zum Zwecke einer Selbstjustierung der Einkoppeloptik 2.1 diese in einer axial verschiebbaren Fassung 2.4 befestigt, welche durch einen elektrischen Antrieb 9, z. B. ein Elektromotor, bewegt wird. Die Steuerung des Antriebs erfolgt durch einen Temperaturfühler, der in dem Führungsstift 4.1 des Koppelelementes 4 thermisch leitend befestigt ist. Das Temperatursignal wird in einer für den Fachmann geläufigen und daher nicht näher ausgeführten Schaltung verarbeitet, welche den Antrieb auf eine Position steuert, bei welchem die Temperatur im Führungsstift ein Minimum erreicht. In diesem Fall kann davon ausgegangen werden, daß eine optimale Einkopplung des Laserlichtes in den Lichtleiter stattfindet.

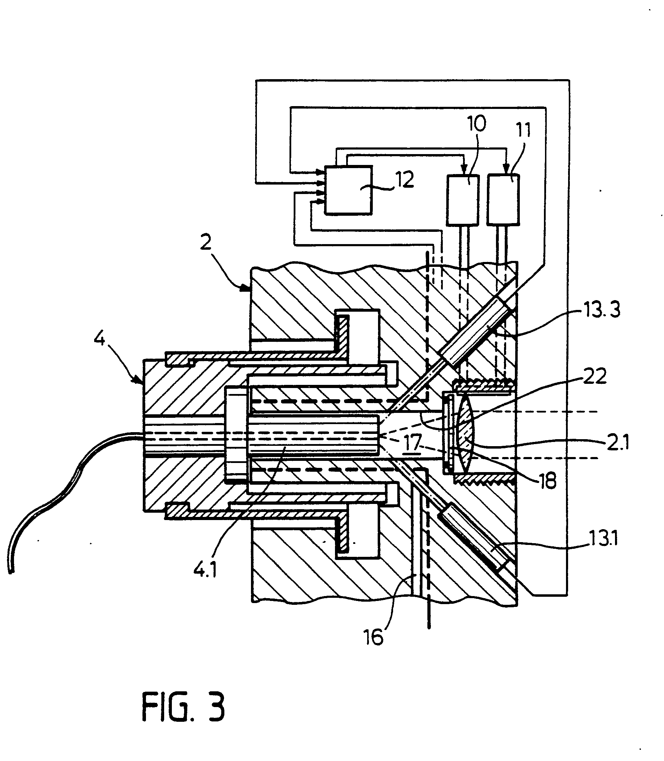

Das in Fig. 3 dargestellte Ausführungsbeispiel geht wiederum von einer Verbindung gemäß Fig. 1 aus, wobei zur optischen Selbstjustierung vier Photoelemente vorgesehen sind, welche unter einem Winkel von etwa 45° auf vier Bereiche der Stirnfläche des Führungsstiftes 4.1 gerichtet sind, welche in etwa den Quadranten der kreisförmigen Stirnfläche entsprechen. Von den vier Photoelementen sind lediglich zwei (13.1 und 13.3) in der Schnittzeichnung zu erkennen. Die Photoelemente erfassen die von der Stirnfläche des Führungsstiftes nicht eingekoppelte und somit reflektierte Laserstrahlung und geben intensitätsabhängige Signale an eine Elektronik 12. Diese steuert zwei elektrische Stellglieder 10 und 11, mit denen die Einkoppeloptik 2.1 in axialer und radialer Richtung verschoben wird, bis die reflektierte Laserstrahlung in allen vier Photoelementen ein gleiches Signal liefert und die reflektierte Strahlung insgesamt ein Minimum ist.

Die Stirnfläche des Führungsstiftes 4.1 bildet zusammen mit der Wandung 2.2 und einer O-Ring-gedichtetem transparenten Scheibe 18 eine im wesentlichen luftdichte Kammer 17, welche über eine Leitung 16 mit einem Unter- bzw. Überdruckerzeuger verbunden ist. Dadurch ist die Verbindung nicht nur selbststeckend, sondern auch noch selbsttrennend.

Sollte in dem Koppelelement 2 kein Platz mehr für die Unterbringung von Photoelementen sein, so könnte die rückgestreute Laserstrahlung auch mittels eines im Strahlengang befindlichen Umlenkspiegels ausgekoppelt und gemessen werden.

Auch ist es selbstverständlich möglich, auf die elektrischen Stellglieder zu verzichten und die Einstellung der Einkoppeloptik aufgrund der angezeigten Meßwerte per Hand vorzunehmen.

## Patentansprüche

1. Lösbare Verbindung zwischen einer Lichtleitfaser und einem Lasergerät, insbesondere für medizinische Zwecke, mit einem ersten laserseitigen und einem zweiten lichtleitfaserseitigen Koppelement, welches in eine Lichtaustrittsöffnung des ersten Koppelelementes einsteckbar ist, wobei in der Lichtaustrittsöffnung des ersten Koppelelementes eine mit diesem verbundene, parallel und/oder senkrecht zur optischen Achse justierbare Einkoppeloptik angeordnet ist, dadurch gekennzeichnet, daß das erste Koppelelement (2) eine Einrichtung (2.5) zur Erzeugung einer axialen Kraft auf das zweite Koppelelement (4) aufweist derart, daß die Verbindung selbststeckend wirkt und, daß an dem ersten und zweiten Koppelelement (2 und 4) Kontaktflächen (2.3, 4.2) mit guter Wärmeleitfähigkeit vorgesehen sind, mittels welcher im eingekoppelten Zustand Wärme vom zweiten Koppelelement (4) auf das erste Koppelelement (2) übertragen wird.

2. Verbindung nach Anspruch 1, dadurch gekennzeichnet, daß die Einkoppeloptik (2.1) eine mechanische und/oder elektrische Stelleinrichtung (2.4 ; 9, 10, 11) aufweist, welche unter Verwendung der Signale einer die Strahlungsintensität des in die Lichtleitfaser eingekoppelten und/oder nicht eingekoppelten Laserlichtes direkt und/oder indirekt messenden Fühleinrichtung (13, 14) gesteuert wird.

3. Verbindung nach Anspruch 2, dadurch gekennzeichnet, daß die Fühleinrichtung ein mit dem zweiten Koppelelement (4) thermisch leitend verbundener Temperaturfühler (14) ist.

4. Verbindung nach Anspruch 2 oder 3, dadurch gekennzeichnet, daß die Fühleinrichtung zumindest einen photoelektrischen Empfänger (13) aufweist, der die von dem im eingekoppelten Zustand befindlichen zweiten Koppelelement (4) reflektierte Laserstrahlung empfängt.

5. Verbindung nach einem der Ansprüche 1 bis 4, dadurch gekennzeichnet, daß das erste Koppelelement (2) eine elektrische Kontrolleinrichtung (5, 6) aufweist, welche bei nicht vollständig eingestecktem zweiten Koppelelement (4) eine elektrische Verbindung herstellt oder unterbricht.

6. Verbindung nach einem der Ansprüche 1 bis 5, dadurch gekennzeichnet, daß die Einrichtung zur Erzeugung einer axialen Kraft ein mit dem ersten Koppelelement verbundener Elektro- oder Permanentmagnet (2.5) ist und das zweite Koppelelement (4) ein ferromagnetisches Material (4.1) aufweist.

7. Verbindung nach einem der Ansprüche 1 bis 6, dadurch gekennzeichnet, daß das erste und zweite Koppelelement (2 und 4) eine im wesentlichen luftdichte Kammer (17) bilden, in welcher zur Erzeugung einer axialen Kraft auf das zweite Koppelelement (4) ein Unter- oder Überdruck erzeugt wird.

## Claims

1. A releasable connection between a photoconductive fibre and a laser apparatus, more especially for medical purposes, with a first laser-side coupling element and a second photoconductive-fibre-side coupling element which is insertable into a light exit aperture of the first coupling element, in which respect arranged in the light exit aperture of the first coupling element is a coupling-in optical system which is connected to this and which is adjustable parallel and/or perpendicularly to the optical axis, characterised in that the first coupling element (2) has a mechanism (2.5) for generating an axial force on the second coupling element (4) in such a way that the connection acts in a self-plugging manner, and in that provided on the first and second coupling element (2 and 4) are contact surfaces (2.3, 4.2) having good thermal conductivity, by means of which in the coupled-in state heat is transferred from the second coupling element (4) to the first coupling element (2).

2. A connection according to claim 1, characterised in that the coupling-in optical system (2.1) has a mechanical and/or electrical adjusting mechanism (2.4 ; 9, 10, 11) which is controlled using the signals of a sensing mechanism (13, 14) which measures directly and/or indirectly the radiation intensity of the laser light coupled-in and/or not coupled-in into the photoconductive fibre.

3. A connection according to claim 2, characterised in that the sensing mechanism is a temperature sensor (14) connected in a thermally conductively manner to the second coupling element (4).

4. A connection according to claim 2 or 3, characterised in that the sensing mechanism has a least one photoelectric receiver (13) which receives the laser radiation reflected by the second coupling element (4) which is in the coupled-in state.

5. A connection according to one of claims 1 to 4, characterised in that the first coupling element (2) has an electrical controlling mechanism (5, 6) which, when the second coupling element (4) is not completely inserted, establishes or interrupts an electrical connection.

6. A connection according to one of claims 1 to 5, characterised in that the mechanism for generating an axial force is an electro- or permanent magnet (2.5) connected to the first coupling element and the second coupling element (4) includes ferromagnetic material (4.1).

7. A connection according to one of claims 1 to 6, characterised in that the first and second coupling element (2 and 4) form a substantially airtight chamber (17) in which an underpressure or overpressure is created for generation of an axial force on the second coupling element (4).

**Revendications**

1. Liaison libérable entre une fibre optique et un appareil laser, notamment dans le domaine médical, comprenant un premier élément de couplage côté laser et un deuxième élément de couplage côté fibre optique qui peut être enfiché dans une ouverture de sortie de lumière du premier élément de couplage, une optique de couplage disposée dans l'ouverture de sortie du premier élément de couplage étant reliée à cet élément et pouvant être ajustée parallèlement et/ou perpendiculairement à l'axe optique, caractérisée en ce que le premier élément de couplage (2) possède un dispositif (2.5) pour la génération d'une force axiale agissant sur le deuxième élément de couplage (4), de façon que la liaison soit à auto-enfichage, et que sur le premier et sur le deuxième élément de couplage (2 et 4) sont prévues des surfaces de contact (2.3, 4.2) ayant une bonne conductibilité thermique, au moyen desquelles la chaleur est transmise à l'état couplé du deuxième élément de couplage (4) au premier élément de couplage (2).

2. Liaison selon la revendication 1, caractérisée en ce que l'optique de couplage (2.1) possède un dispositif de réglage (2.4 9, 10, 11) mécanique et/ou électrique qui est commandé en utilisant les signaux d'un capteur (13, 14) mesurant directement et/ou indirectement l'intensité de rayonnement de la lumière laser couplée et/ou non couplée dans la fibre optique.

3. Liaison selon la revendication 2, caractérisée en ce que le capteur est un capteur de température (14) relié de façon thermiquement conductrice au deuxième élément de couplage (4).

4. Liaison selon la revendication 2 ou 3, caractérisée en ce que le capteur possède au moins un récepteur (13) photoélectrique qui reçoit les rayons laser réfléchis par le deuxième élément de couplage (4) se trouvant à l'état couplé.

5. Liaison selon l'une quelconque des revendications 1 à 4, caractérisée en ce que le premier élément de couplage (2) possède un dispositif de contrôle (5, 6) électrique qui établit ou interrompt une liaison électrique lorsque le deuxième élément de couplage (4) n'est pas complètement enfiché.

6. Liaison selon l'une quelconque des revendications 1 à 5, caractérisée en ce que le dispositif pour la génération d'une force axiale est un aimant permanent ou électrique (2.5) relié au premier élément de couplage et que le deuxième élément de couplage (4) possède un matériau ferromagnétique (4.1).

7. Liaison selon l'une quelconque des revendications 1 à 6, caractérisée en ce que le premier et le deuxième élément de couplage (2 et 4) forment une chambre (17) sensiblement étanche dans laquelle est créée une sous-pression ou une surpression en vue de la génération d'une force axiale agissant sur le deuxième élément de couplage (4).

FIG. 1

FIG. 2

FIG. 3